# EUROPEAN PATENT SPECIFICATION

(11) **EP 3 879 793 B1**
(45) Date of publication and mention of the grant of the patent: **13.03.2024**
(21) Application number: 20162979.7
(22) Date of filing: 13.03.2020
(51) Int. Cl.: H04L 67/289, H04W 88/16

(54) **NETWORK ARCHITECTURE**
NETZWERKARCHITEKTUR
ARCHITECTURE DE RÉSEAU

(43) Date of publication of application: 15.09.2021
(73) Proprietor: Deutsche Telekom AG, 53113 Bonn (DE)
(72) Inventor: VAN DEN BERGE, Fridtjof, 53227 Bonn-Oberkassel (DE)
(74) Representative: Vossius & Partner Patentanwälte Rechtsanwälte mbB

(56) References cited:
- WO-A1-2018/024344
- NAN WANG ET AL: "ENORM: A Framework For Edge NOde Resource Management", ARXIV.ORG, CORNELL UNIVERSITY LIBRARY, 201 OLIN LIBRARY CORNELL UNIVERSITY ITHACA, NY 14853, 12 September 2017 (2017-09-12), XP080820603,
- Etsi Etsi Disclaimer: "Multi-access Edge Computing (MEC); Framework and Reference Architecture", , 1 January 2019 (2019-01-01), XP055696318, Retrieved from the Internet: URL:https://www.etsi.org/deliver/etsi_gs/M EC/001_099/003/02.01.01_60/gs_MEC003v02010 1p.pdf [retrieved on 2020-05-18]

## Description

### Field of the invention

This invention relates to a Cloud - Edge network architecture for reducing all types of bufferbloats, delays, etc, by not requiring the generation of traffic to be transmitted in requests to some centralized node.

### Background

Data transmission is common thing in our society and, in the future, it is expected that the data transmission demand will still grow more and more, i.e. in new services, such as, for example, Internet of Things, IoT, and all its sub-versions (e.g.: Application-to-Person (A2P), Business-to-Business (B2B), Business-to- Business-to-Consumer (B2B2C), Machine-to-Machine (M2M), Person-to-Person (P2P)).

An important issue to consider in the design of all these systems is the costs, which are generated by the survey of the landlines and their appropriate maintenance, repairs, exchanges, as well as the fixed costs for the landlines.

Some factors which may have an influence in occurring costs due to transmitting/sending a bitstream of data to a destination/receiver may be the following:
- Bufferbloat. An occurrence in mainly routers, where data/message-streams are internally stored before being transmitted. As a consequence of this, delays in the arrival at the destination node of such streams are rather common in modem IP-networks.
- Data errors can always occur during a transmission of data, due to various discrepancies: in the connectivity and its quality, software-version, the size of the maximum segment size (MSS) in comparison to the allowed maximum transmission unit (MTU), interferences in transitions (e.g. in TCP-transmissions, retransmissions of data may be needed when data errors occurs, which has a negative impact to the occupancy of the needed capacities).
- Data processing and its weighting are becoming more complex and may require the transfer, from a sender node to a receiver node, (on ISO layer - L4) through an appropriate node (on ISO layer - L2/L3) for either checking or marking the payload with a certain priority-ID. Specifically, when a transfer from a first node to a second node is required, the processing of the received information on the second node and the following reply back from this second node towards the first node, where yet again a processing and forwarding operation, of it's received information, is performed towards the first, or next node, will evolve. In other words, at each single transfer to a new node along a trajectory, the header-information is to be read again, i.e. the processing of the header-information, checking the next hub and forwarding the stream towards this next hub. As a consequence of this, delay-times are additionally occurring at each node in the path of transmission. This goes on in every following next hub until destination is reached.
- Due to different scenarios, circumstances, priorities and restrictions such as, for instance a limit in resources, such as: interfaces (on L4; speed, quantity), security-presets (with appropriate nodes, e.g. ACL on routers, firewalls, etc.), (up to date) software.

In the above context, it is important to bear in mind that any changes to an existing legacy architecture of a network are mainly intensive and expensive.

The network architectures are mostly based on factors, such as an end-of-sale/-support (EoS) or an end-of-live (EoL), by a manufacturer of the used nodes in the respective networks. In other cases, used nodes have to be changed, due to, for example, the limited scalability of the until-then used hardware. Other factors to this could be, for example, new services which have to be implemented, and/or a different standard or a combination thereof.

Often, changes in network architectures are mostly driven by low-cost-efforts and may be limited to its new design, or by the grade of thoroughness of the network's architects to come to renewals and simplifications, i.e. in order to achieve lower delays and costs through the new design.

As a consequence of the above, in the case of an existing IT-landscape, a full-change of the network architecture is very expensive and complex to set up. Also, most of the still centralized data centers, for implementing the various services, even in a redundant build-up at different locations with the rise in data traffics with an expected growth, may require an increase of the number of gateway nodes by a factor of 20 to 30 times the original amount, depending on network's and nation's size.

In this scenario, if operators choose to stay with the existing gateway architecture, the complex and massive gateway service configuration will significantly increase both the Capital Expenditure (CAPEX) and Operational Expenditure (OPEX) budgets, thereby making the use of the network and the network itself more expansive.

In view of all the above problems, only partial changes are generally performed. Radical changes may need another approach, through to the latest respective new developments. Multi-connectivity and mobile-fix-convergence (MFC) will become the main keys of high speed, better switchovers and reliability - within and between networks.

Network sites may support multiple modes (such as e. g. for 5G, LTE, and Wi-Fi) in the form of macro-, micro-, and pico- base stations of the Radio Access Network (RAN), as well as the core network for the fixed-lines.

Nan Wang et al: "ENORM: A framework for edge node resource management", XP080820603, relates to mechanisms for provisioning and auto-scaling edge node resources.

### Technical problem

The immense growth of the internet as a whole has resulted in a very complex architecture, which results in a kind of network that is very difficult to monitor and no end-to-end view is possible to understand and to manage due to its huge scale in terms of both the connected devices and the actors in play (e.g. end users, content providers, equipment vendors, etc).

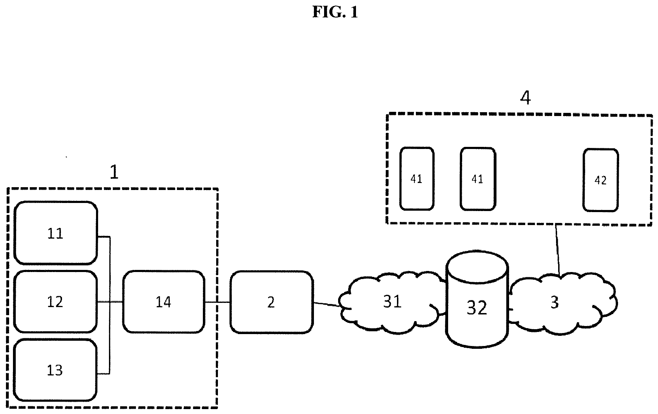

Figure 1 illustrates an exemplary Broadband Network Gateway (BNG) architecture. As shown in FIG. 1, the customer premise equipment 1 (CPE) of the subscriber is connected and served with any broadband services through the core network, namely the network operation center 4 (NOC). The CPE 1 comprises, for example: a phone 11, a STB/TV 12, a PC 13, and a Home Gateway (HG) 14 which is connected to a Digital Subscriber Line Access Multiplexer 2 (DSLAM). The core network 3 is formed, for example, by the aggregation switch 31 (AGG) and the Broadband Network Gateway 32 (BNG), etc. The NOC 4 comprises, for example, a RADIUS servers 41 and a Dynamic Host Configuration Protocol (DHCP) server 42.

To this end, various protocols have been standardized, which do not add transparency, such as, for example, the various privacy extensions for both IPv4 and IPv6. Thus, network architectures are not transparent.

The virtualization, if implemented, is on services at the core-side of the network. The customer is on the aggregation side of the network. In other words, this means that the customer is on the side of the network where multiple network connections are combined in parallel in order to increase throughput beyond a single connection capacity, and to provide redundancy in case one of the links has failure.

Within the core side of the network, there is a split between subscriber session serving entities and, for instance, those for the network management and/or any security providing entities of the network.

The quintessence of modem networks lay in cost savings (e.g. due to thorough automation, improved cost efficiencies, competitive advantages in comparison to its competition, etc) in the relevant IP- architecture and in the optimization of the cabling-structure of the communication with respect to the data network.

Less data transfers for the various normal requests to the network, e.g. to the Home Location Register (HLR)/ Home Subscriber Server (HSS), will reduce the network loads on its infrastructure.

To achieve this, the further below described Cloud - Edge network structure of the present invention is designed to reduce all kinds of bufferbloats and likewise, as no traffic is generated to ask a request at some centralized node. In such a case the necessary Common Data Link data is as a copy already in the Edge instance available, thereby reducing bufferbloats, delays, etc.

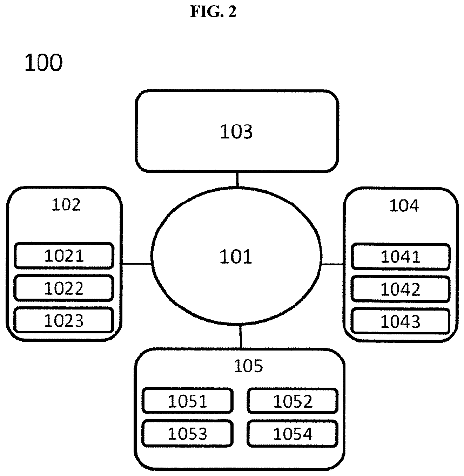

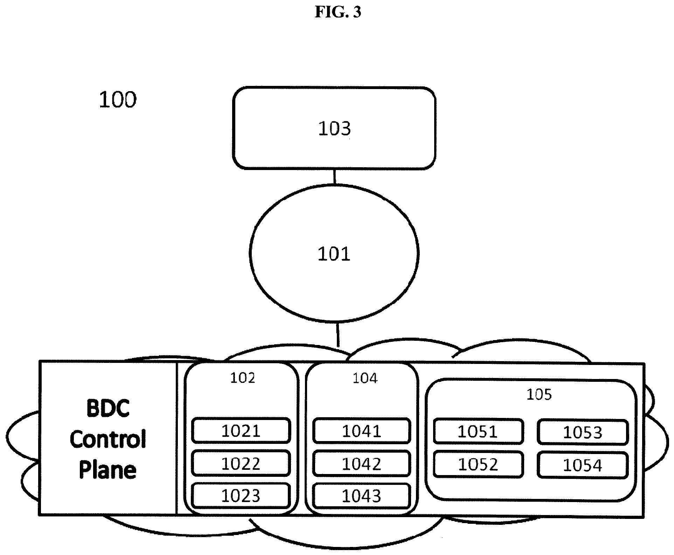

Figures 2 and 3 show a comparison between an exemplary actual subscriber data management (SDM) architecture with a centralized database-platform and an improved near-future subscriber data management (SDM) architecture with a shared data layer, respectively.

Figure 2 illustrates an exemplary current subscriber data management (SDM) architecture with multiple application front ends and a centralized database platform. In this example, the SDM architecture is characterized in that the database 101 is physically connected to the various relevant instances of the network, i.e. user profile domain 102 (for example comprising: Home Location Register (HLR) 1021, Home Subscriber Server (HSSepc) 1022, HSSims 1023), single point of provisioning 103, application server 104 (for example comprising: Multimedia Telephony Service (MMTEL) 1041, MSG AS 1042 and Visitor Location Register (VLR) 1043), value added services 105 (VAS) (for example comprising: Hierarchical Cell Structure 1051, Authentication, Authorization and Accounting (AAA*) 1052, Policy and Charging Rules Function (PCRF) 1053, and others 1054), etc.

As illustrated in figure 3, the architecture shows an entire subscriber data management-level which is over the various instances, thereby guaranteeing an uninterrupted service, due to the statefulness of the call state-, session- and/or subscription data within the data management, even in the case, for example, that various Authentication, Authorization and Accounting (AAA) and/or HLR/HSS instances are not reachable within the network anymore. As soon as a service is activated, the stateful status within the database 101 does not change and supports the current connectivity. It even will not change in the example names instances which are not reachable anymore.

In sum, the still legacy solution of figure 3 within the subscriber data management SDM had an enhancement by virtualization by software. In figure 3, the management of this virtualization software runs over the BDC control plane to each relevant instance.

Security-outsets to the improved form of communications of figure 3 may not lead to a normal peer-to-peer P2P upset on the systems, but more likely to a hierarchical peer-to-peer, where dynamic central servers have the task to govern and secure the incoming traffic. Thus, there are no direct connections between servers, but only through a centralized server(-s) of the hierarchical peer-to-peer network. These centralized servers have a security task, apart from the distributing task within the network, in checking traffic on for instance malware and likewise.

Another outset for a new network architecture is the fixed-mobile convergence (FMC), i.e. a change in telecommunications aimed to remove differences between fixed and mobile networks, thus making network nodes able to serve both fixed and mobile networks features.

Data through fibers travel at approximately two thirds of the light speed (200km per millisecond approximately), but for each traversed node some delays occur such as, for example, receiving, calculating and sending the data to the next hubs towards the end-node whether processing and reply times occur. In addition, while the data changes from one domain to another, other delay times occur, such as passing firewalls and gateways.

The most prominent feature of the invention is the availability over all instances of the same and in real-time updated subscriber information. Through this, the provisioning of user and/or usage rights is easier to handle and to update for each customer at its given location, and has a direct relation to its billing.

Thus, the data remains available and persistent, until renewed, as long as the customer is on location and the session is open by the network's browsing respective customer between the parties through a call and only to be terminated as the remaining connection is terminated by the customer resp. by either one of the two last participants. A halted activity, through a possible failure, of for example HLR resp. HSS would not stop a session as it was started.

Accordingly, much shorter response times may be achieved, because the relevant needed data is already locally available and must not be requested through other nodes at the dedicated server for this, with a return path through the same infrastructure.

In view of the above, it is an object of the present invention to provide a network architecture that requires less data transfers for the various normal requests to the network, such as for example, requests to the Home Location Register (HLR) and/or the Home Subscriber Server (HSS), thereby reducing the load of the network on its infrastructure.

To achieve this, the invention provides a Cloud - Edge network architecture which is designed for reducing all types of bufferbloats, delays, etc, by not requiring the generation of traffic to be transmitted in requests to some centralized node. In such case, the necessary Common Data Layer, CDL, data is available as a copy already in the Edge instance.

### Summary of the invention

The invention is specified by the independent claims. Preferred embodiments are defined in the dependent claims. The above objects are achieved by the features of the independent claims. According to a first aspect, the invention provides a communications network as defined by independent claim 1.

According to a second aspect, the invention provides a method for communications in a communications network as defined by independent claim 3.

According to a third aspect, the invention provides a computer program having a processor being configured to perform the method as described in the above aspects.

### Brief description of the drawings

In the drawings:
FIG. 1 illustrates an exemplary Broadband Network Gateway (BNG) architecture.
FIG.2 illustrates an exemplary current subscriber data management (SDM)-architecture with a centralized database-platform.
FIG. 3 illustrates an exemplary near-future subscriber data management (SDM)-architecture with a shared data layer.
FIG. 4 illustrates an architecture according to an embodiment of the invention with centralized L2 and L3 instances, which serve as a hub and provide as such multiple functions for the network.
FIG. 5 illustrates an architecture according to an embodiment of the invention with the horizontal subscriber related data layer over all servers and the specific vertical service-dedicated virtual instances on these network servers.
FIG. 6 illustrates an architecture according to an embodiment of the invention with the connectivity of a centralized database with respect to the cloud solution and the relevant gateways.
FIG. 7 illustrates an architecture according to an embodiment of the invention with vertical slices services and network entities, and the horizontally sliced common data layer (CDL) and customers (at a gateway respective RAN-site)
FIG. 8 illustrates a zoomed view of the example shown FIG. 7 in form of a matrix with vertically sliced server entities and its provided services, which respectively provide to the various horizontal customers.

### Detailed description of the invention

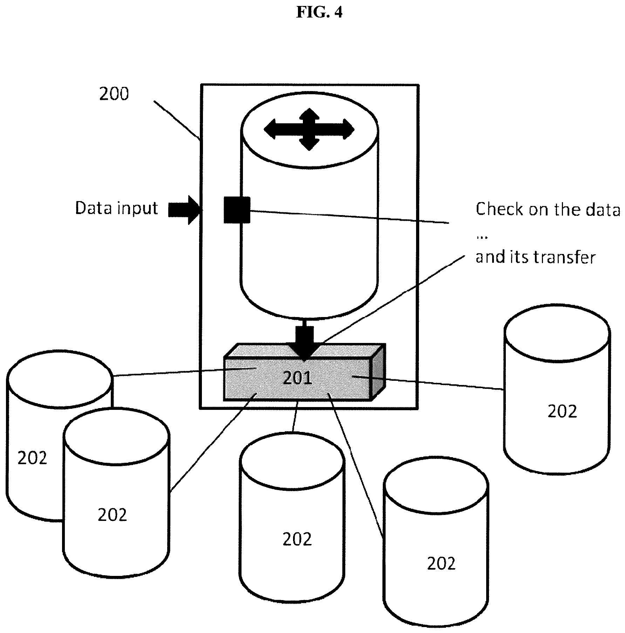

Figure 4 illustrates an architecture according to an embodiment of the invention with a centralized L2 and L3 network gateway entity 200, which serve as a hub and provide as such multiple functions for the network according to the present invention. In figure 4 nodes 202 are connected in a direct fashion. The gateways/centralized servers continue to have a direct controlling function for the security of the entire network. A hub-and-spoke concept is in the architecture, but the hub is the combination of L2 and L3 instances, as where the hub is both gateway, security-providing and distribution entity 201. Accordingly, all nodes 202 within the IP-network are connected to and through the L2 distribution entity 201. All nodes 202 are indirectly connected with each other over the L1-physical layer (over the L2-switch entity).

The slicing within the IP-network is for applications and services on a vertical level, as each single IP- network server may be a host for several (virtualized) services. For speedy handling, as well as billing, a horizontal layer is over all server-entities of the IP-network. In this horizontal layer the subscriber data management (SDM) is stored in a common data layer (CDL).

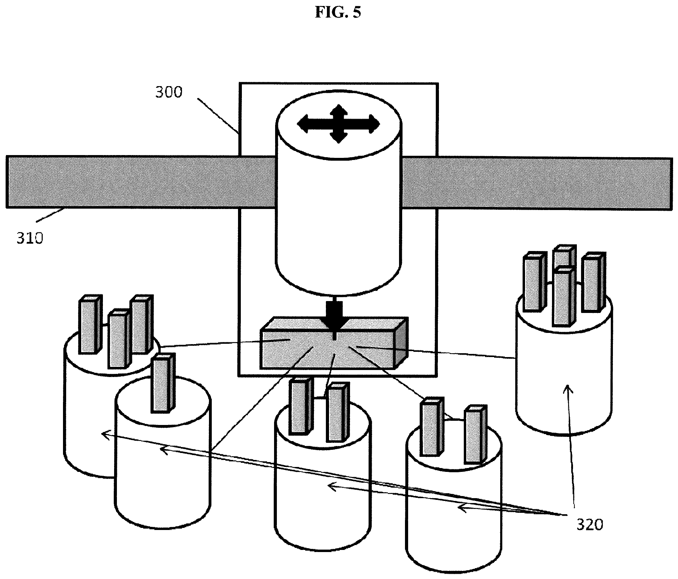

The setting up of the horizontal common data layer 310 with its subscriber data management over the vertically sliced virtual instances 320 on the network servers has multiple advantageous technical effects. For example, the customer's data (e.g. call state, session, and/or subscription data) is at all times virtually copied and stored at a dedicated entity of the RAN-base station constellation (i.e. Edge-computing instance or fixed-line gateways), from where it can be used within the shortest delay time. This is shown, for example, in FIG. 5 which illustrates an architecture with the horizontal subscriber related data layer 310 over all servers and the specific vertical service dedicated virtual instances on these network servers 320.

Further, a full independency of, for instance, a HLR respective HSS (subscriber data) can be reached in case of an outage of such an entity, during an active call respective browsing. Besides, also the shortest delay-times are possible, due to the already available data at the needed location. This is due to the fact that the data does not have to be checked at each single node (i.e. at each router, each firewall, ...) towards the location during the call.

### (FlexArch principle)

Transitioning from a legacy architecture into a flexible architecture of communication must be done smoothly. This smooth transition means that servers are possibly migrated and services are transferred in the needed phases to the central servers (e.g. cloud infrastructure) of the network's provider. A time based pressure can only partially be there, as hardware entities reach their respective End-of-Life (EoL).

The centralized servers are physically connected over a Common Service Layer (CSL) to for instance locally-based server entities over the access points and gateways at the respective RAN-locations at various regions connected. The data for the customers at those locations is continuously copied from the centralized entities as it changes toward the locally-based held storage entity/entities. Through a log-book functionality only the changed data is renewed.

According to this configuration, independency of dedicated HLR and HSS servers is achieved.

Hence, all services that have to be delivered to the respective customers can be provided in an almost real-time fashion over these locally-based server entities. With a real-time allocation ability, which could be reached on a license-basis with a hardware and software provider, such hardware contingencies could be provided.

On the basis of the customer-profiles, the required services respective tasks can be copied into the respective local entities. In the case of a mobile handover, the likely RAN station(s) at the edge of the current occupied RAN station(s) provision will get a copy of the customer's data respective profiles, as well as the required services respective tasks to take over in full for this customer, on a real-time basis, even though the RAN station did not have these provisioning abilities until then (Software Defined Networking (SDN)/Virtualized Network Function (VNF)).

As such, flexible architecture of communication with respect to the data networks, means providing all necessary parameters, physically or virtually usable.

### Physical provisions

According to the flexible architecture of the present invention, each node's respective server needs to have a connectivity in each routing path. As such, a network's entity has to be connected to almost every other node, even if it is over the Common Service Layer (CSL).

Multiple coupling interfaces are favorably transformed to converge into a single interface. Through this, the amount of physical interfaces is reduced to appropriate logical interfaces (with their subsequent port numbers) on a highly able physical interface with a high throughput capacity. The throughput capacity is itself extendable through software, as throughputs are sold favorably in contingencies.

The centralized nodes may be the servers and storages in the so-called Cloud solution of the network.

The edge nodes are able to take, within the capacities of the local RAN site for the booking of customers into it, the provision of services for the customers at this specific RAN site.

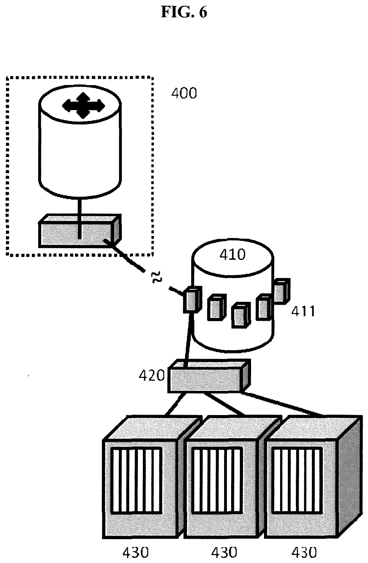

The centralized database 410 (i.e. cloud) has its front-end instances 411, which are connected to the various Edge-computing instances 430 with their access gateways and or RAN sites 420, in a redundant fashion. FIG. 6 illustrates an architecture with the connectivity of a centralized database 410 with respect to the cloud solution and the relevant gateways 420 with the centralized database 410 and its front-end instances 411.

Accordingly, the fail safeness respective reliability will be put on a higher level, in comparison to a non-redundant connectivity (state of the art).

Each RAN site has one or more fallback RAN site, which are able to take over the customers of their initial RAN site, in case of a fall-out or a distress. These would be the redundant RAN sites to the first, which are also handover prepared as such, as the data is only held in storage copy, just in case. The same applies to the (fixed line) access gateways respective points and/or for both a gateway point and a RAN site in a mobile fix convergence.

When building up an Edge computing instance, a balance between the following parameters needs to be kept:
- Size and local expectations of the customer's growth and quantum at a high-time (such as in cases of concerts, demonstrations, etc) for the local gateway and/or RAN site.
- A preferably full redundancy from the centralized database (cloud) on to its hierarchically lower instances and within these (edge > access points and/or RAN sites).
- The distance to a neighboring Edge computing instance for a fallback scenario should preferably be with still comparable delays.
- In larger urban surroundings, it is desirable to have various Edge computing instances within the city or region, thereby having a full and possibly even multiple redundancy. The size of each Edge instance should allow the possibility of taking over the requirements from another Edge instance to its own and still stay within the limits.
- In suburban surroundings, specially in mountainous environments, probably a single Edge computing station provides the provision for stateful connectivities and/or the lowest possible response delays. In such a case, the next Edge computing instance as a redundancy to the first may be, for example, in the next valley, within a shortest possible occurring delay.
- The majority of blade-servers, nowadays available within the Edge computing instances, should be fully able to provide every possible service to the network's customers through virtualization-software. As such at least the majority of blades of such an installed blade-server is fitted with the necessary virtualization- and service-software. In this, software may be there, but as they are not used by any customer, they may occupy storage-capacity dedicated for this task, but without putting a load on the processors of each blade, as this task did not come up.

The computing and storage tasks are mainly centered in both the network's centralized databases (Cloud) and in the local centralized databases (Edge).

A Cloud-computing instance is hieratically on the top level of the network's infrastructure. The Cloud-computing instances are preferably positioned in corresponding strategic distances environments. The Cloud instances are interconnected for e. g. redundancy aspects. Directly underneath the Cloud instance there are provided the Edge computing instances at either the edges of a network or at local center points, which are thus mainly locally deployed. These Edge computing instances are also interconnected within their level, favorably to other neighboring Edge computing instances.

The Edge computing instances provide the local edge of a network's periphery with a grand capacity in data processing as well as storage and see through the locally processed and eventually given storage of the data for a lower need of network bandwidth. In particular, the growing numbers of customers and connections, in combination with the needed service bandwidths to services, the available bandwidth provisions in a network remain their bottle necks. Thus, the closer the processing and given storage is performed to the customer, the less straining are these bottle necks.

### Logical provisions

Customer data is locally held, stored and remains in a stateful fashion for the time-span of a call or session of browsing (data connectivity) for the customers, which are in the respective access RAN area.

If the customer's data is -preferably- integrated (wherein integrated means holding the copied customer's data from the relevant HLR / HSS, which is a virtualized entity, and the physical entity is the required storage capacity) in a node, as an added service in a respective virtual instance, then it will have all requirements to provide the local nodes with the relevant data to keep for instance a call- and/or data session open and thus active.

As the local virtualization of various services is performed at the edge-computing site, the total quantity of required nodes for such a network can be reduced on the basis of the reduced quantities of mostly managing nodes. Only centralized specific nodes are needed for services, but the relevant data from these centralized specific nodes to keep up a call and/or data session is copied to a local node of the local Edge infrastructure upon being in the customer's proximity, where it is stored for the duration of the relevant call and/or session. With this, the session is ended by the participant of the session and not by (centralized) HLR/HSS nodes.

As such, the virtual assignment of software and, possibly, the needed physical capacities at the dedicated server(s) of an access point (gateway) and/or RAN-area are provided, as the respective customer is booked in on the respective location. The appropriate data is kept statefully, as long as the (Home Public Land Mobile Network (HPLMN)/Visited Public Land Mobile Network (VPLMN)) customer is within reach of the access-gateways respective RAN site.

With the Virtualized Network Function (VNF) ability of the site's local entities, with its respective servers, it is possible to achieve the lowest possible delay with respect to stall times. Through the Software Defined Networking (SDN) abilities of the site's local entities, with its respective servers, it is possible to allow for the provision of, for example, a firewall functionality on such equipment.

As the physical components become less in quantity in the described network architecture, the physical build up of a network can be less complicated and expensive. Similar to the case of a checking on transferred bit-streams and its returned checksum, there lays a self-learning ability in a network. As such, even a loss of bits could be located as happening in a specific node, thereby enabling the network to reroute traffic around this specific problematic node, until the problem is solved.

Accordingly, since fewer disturbances occur (through an automated checking and management), a customer may not notice a problem that has occurred in the network, as it is restored to the normal working status as soon as it occurs. To this, the causes for various errors and with this cost causes could be restraint, as the commonness in errors is more easily detected within a network. As such, the various cost causes could be restrained in parallel, as for e. g.: code errors; conflicts with other scripts; connectivity errors; reduction of the so called Bounce-rate; reduction in Cross-domain routings; data errors; hardware errors; linking errors in scripts; reduction of instances / nodes, which are passed travelling towards the destination of the data-stream; etc.

Thus, optimizing the network's usability and reliability, as well as its efficiency.

### Scalability

The scalability of the flexible architecture is software-based. Thus, logical instances in their surrounding Edge infrastructure are formed and managed by the license over the used dedicated software. Due to the common data layer (CDL), all nodes are provided with this software. As the software is implemented on these virtualized enabled nodes, appropriate logical instances could be played on these hardware entities, which set the required hardware capacity free.

Within the flexible architecture, any multiple coupling interfaces are transformed to converge into a single interface. This single interface is also a scalable entity, on the basis of the appropriate physical set-outs and the subsequent software.

The physical set-outs of the interface could be like a kind of an enhanced (e. g. HDMI-) interface, yet with respectively more data carrying strips on its interface surface.

The logical set-outs are software-based including virtualization.

The scalability involves, as examples: service and management areas; service chaining; service plurality (such as messaging, streaming, Voice over IP (VoIP) and web-services, etc).

Hardware in a respective Cloud-Edge environment, on the favorable basis of virtualization(-s), is based on a stand-by solution for hardware, until its performance is required, i.e. the hardware may only need to run the (virtualized) software for a service only when it is need. This would see to favorably longer idle-times for software and lower energy-usages.

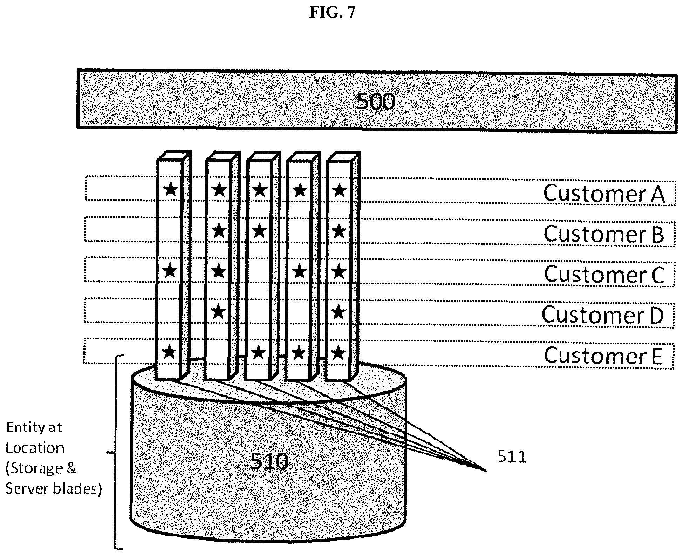

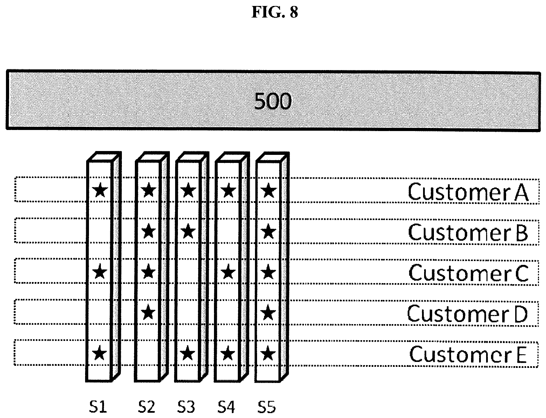

For example, this is described in the logic of FIGs. 7 and 8, where, in the horizontal slices (CDL) 500 and vertical slices 510, only a single action has to occur for dedicated (virtualized) services (preferably per blade) S1 to S5 for active dedicated customers A to E. In figure 7, the entity at location 510 may be formed by server blades for storing the various (virtualized) services S1 to S5.

From these horizontal and vertical slices, a number of non-crossings and/or blanks between customers A to E and services occur, which may never lead to an activity. Alternatively, in the case where crossings of customers A to E and services occur, only actions are required, as active customers need the respective virtualized services.

This leads to an improved idle status and, thus, lowers energy-consumptions.

The flexible architecture principle allows a full network awareness of the customer and his logical network based requirements through the common service layer (CSL), which is directly aware through and of the subscriber data management (SDM). Thus, the slicing is done in full:
- Both the customer and subscriber side is described in horizontal slices. Not only is its profile, within the common data layer (CDL), on a horizontal slice, but also its usage.
- The server and their subsequent, and preferably, multiple virtualized services on these entities are on vertical slices.

In sum, the new aspects of the flexible architecture principle are:
1) Its scalability, based on the already physically installed hardware-capabilities, which may be set in service over a software-based license-enablement of capacities for favorable a multitude of service-provisions on the logical instances on the locally-based hardware Edge computing instances. The edge-computing is in the near vicinity of an access point (hotspot, router, RAN-area, ...) and provides the locally needed services to this. As such, all access nodes are lean as virtualizations and, through this, the provision of services to the locally active customers are performed at the edge-computing site.
2) The logical provision in various modes, to enable the customer with the most optimal network's provisions, in accordance with the CDL, CSL and the locally held SDM-copy. This allows for the most optimized real-time provisions as distance-factors are within their most optimized minimums.
3) Minimal cost and error causes.
4) Due to the Cloud - Edge architecture, wherein the Edge instance does all the locally needed computing and storing processing, the load of transfers is further reduced and thus this structure helps though the lower loads on the network to reduce the occurrence of bufferbloat. In other words, as more data is already held locally, with a log-book functionality to check on the status of the locally held data, the fewer queries and answers to these queries run over the network, thereby leading to lower network loads and thus a reduction of the bufferbloats.
5) Due to the Cloud - Edge architecture, the appropriate software versions are network-wide the same, as they are transferred and updated from Cloud to the various Edge instances.
6) The proposed smooth-transition of servers which are possibly migrated on a possible End-of-Life (EoL) basis and services are transferred in the needed phases to the centralized (Cloud-) servers of a provider's network. Hardware reaches an EoL when the manufacturer does not produce the type and its spares anymore. The production of spares exceeds the complete node production, but it mostly stops before the last software-updates is provided. No more software update is a security's no-go, but also the lower availability over a time-span of spares make a further use of a provision-risk respective problem for networks.
7) An extended use of Edge technology infrastructures in the customer's nearer proximity, where also the needed SDM is stored for the duration of the relevant call and/or session. The Edge centralized entities have favorable blade-servers for the virtualized provision of the various services of the specific network. The blades are preferably interchangeable and remain in a standby mode, as their provision of a service to a customer is not required.
8) A software-based scalability of the flexible architecture.
9) A less complex management infrastructure, as less hardware is distributed across the subsequent network. The respective software of both cloud and edge computing sites, which is able to interact on a full scale, is preferably the same, to provide the same services and tasks all over the subsequent network at the same high level. On this software, the virtualization to the access nodes is performed.
10) An uninterrupted service provision remains, as a call or session has been started.
11) A respective redundant access point of a RAN site to a first site, is already prepared for a handover by copying the relevant SDM-related data, which is only held in storage copy until the booking-in of the customer during e. g. a handover, after which it is instantly available to be used and thus independent from e. g. HLR-/HSS-availabilities and connectivities at that exact moment.
12) The single interface is thought of as a scalable entity, on the basis of the appropriate physical set-outs and the subsequent software.
13) The full matrix structure of both common data layer (CDL) and each customer's own layer (horizontally sliced) at the site with the gateway and/or RAN to the (vertically sliced) services and respective network's entity/entities.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A communications network comprising:
a centralized network gateway entity (200) having a horizontal layer with a common data layer, CDL, wherein the CDL is configured to store a subscriber data management, SDM;
one or more locally based server entities (430) having vertically virtualized services, wherein the locally based server entities are edge-computing instances,
wherein the centralized network gateway entity (200) is connected over a Common Service Layer, CSL, to the one or more locally based server entities (430) over an access point (420) or a gateway (420) or a Radio Access Network, RAN;
at least one user equipment, UE; and
a centralized database (410) having one or more front end, FE, instances (411), the centralized database (410) being connected to the centralized network gateway entity (200) and to the one or more locally based server entities (430) over: the access point / gateway (420 redundantly; or the RAN (420),
wherein:
the communications network is configured to provide a plurality of services to the UE via the one or more locally based server entities (430);
the centralized data base is configured to:
store customer's data of the UE, and
transfer a copy of the customer's data of the UE to at least one of the locally based server entities that is within the UE's range;
the at least one of the locally based server entities is configured to store at least one of the plurality of services and keep up a copy of the customer's data in a stateful fashion for a time-span of a call or session of browsing for the customer;
the UE is configured to request at least one required service from the plurality of services;
the SDM is provided via the CDL to all locally based server entities (430) wherein the subscriber data management, SDM, provides the customer's data for each UE that is in the range of the locally based server entity (430) and wherein the customer's data comprises at least one of call state data, session data and subscription data.

2. The communications network according to claim 1, wherein the locally based server entity (430) is configured to continuously copy and store the customer's data at the locally based server entity (430) that is within the UE's range, and to keep the customer's data until the UE terminates the service that it had requested, as long as the UE is within the range of the locally based server entity (430), and a running session is open by a network's browsing UE.

3. A method for communications in a communications network, wherein the communication network comprises: a centralized network gateway entity having a horizontal layer with a common data layer, CDL, wherein the CDL is configured to store a subscriber data management, SDM, one or more locally based server entities having vertically virtualized services, wherein the locally based server entities are edge-computing instances, wherein the centralized network gateway entity is connected over a Common Service Layer, CSL, to the one or more locally based server entities over an access point or a gateway or a Radio Access Network, RAN, and a centralized database having one or more front end, FE, instances, the centralized database being connected to the centralized network gateway entity and to the one or more locally based server entities over: the access point / gateway redundantly or
the RAN,
the method comprising the steps of:
providing, by the communications network, a plurality of services to the UE via the one or more locally based server entities;
storing, at the centralized database, a customer's data of the UE;
transferring a copy of this data to at least one of the locally based server entities that is within the UE's range;
storing, at at least one locally based server entity, at least one of the plurality of services and keeping up a copy of the customer's data in a stateful fashion for a time-span of a call or session of browsing for the customer;
requesting, by the UE, at least one required service from the plurality of services,
wherein a subscriber data management, SDM, is provided via the common data layer to all locally based server entities, the method further comprising: providing, by the subscriber data management, SDM, the customer's data for each UE that is in the range of the locally based server entity and wherein the customer's data comprises at least one of call state data, session data and subscription data.

4. The communications network according to claim 3, the method further comprising:
continuously copying and storing, at the locally based server entity that is within the UE's range, the customer's data; and
keeping, at the locally based server entity that is within the UE's range, the customer's data until the UE terminates the service that it had requested, as long as the UE is within the range of the locally based server entity, and a running session is open by a network's browsing UE.

5. A computer program having a processor being configured to perform the method of any of claims 3 or 4.

## Patentansprüche

1. Kommunikationsnetzwerk, aufweisend:
eine zentralisierte Netzwerk-Gateway-Einheit (200), die eine horizontale Schicht mit einer gemeinsamen Datenschicht (Common Data Layer, CDL) aufweist, wobei die CDL so konfiguriert ist, dass sie eine Abonnentendatenverwaltung, SDM, speichert;
eine oder mehrere lokal basierte Server-Einheiten (430) mit vertikal virtualisierten Diensten, wobei die lokal basierten Server-Einheiten Edge-Computing-Instanzen sind,
wobei die zentralisierte Netzwerk-Gateway-Einheit (200) über eine gemeinsame Dienstschicht (Common Service Layer, CSL) mit der einen oder den mehreren lokal basierten Server-Einheiten (430) über einen Zugangspunkt (420) oder ein Gateway (420) oder ein Funkzugangsnetzwerk (Radio Access Network, RAN) verbunden ist;
mindestens ein Benutzergerät, UE; und
eine zentralisierte Datenbank (410) mit einer oder mehreren Front-End-, FE-, Instanzen (411), wobei die zentralisierte Datenbank (410) mit der zentralisierten Netzwerk-Gateway-Einheit (200) und mit der einen oder den mehreren lokal basierten Server-Einheiten (430) über den Zugangspunkt/Gateway (420) redundant verbunden ist oder über das RAN (420) verbunden ist,
wobei
das Kommunikationsnetzwerk so konfiguriert ist, dass es dem UE eine Vielzahl von Diensten über die eine oder die mehreren lokal basierten Server-Einheiten (430) bereitstellt;
die zentralisierte Datenbank konfiguriert ist zum
Speichern von Kundendaten des UE und
Übertragen einer Kopie der Kundendaten des UE an mindestens eine der lokal basierten Server-Einheiten, die sich innerhalb der Reichweite des UE befindet;
wobei die mindestens eine der lokal basierten Server-Einheiten so konfiguriert ist, dass sie mindestens einen der Vielzahl von Diensten speichert und eine Kopie der Kundendaten in einer zustandsabhängigen Weise für eine Zeitspanne eines Anrufs oder einer Browsing-Sitzung für den Kunden aufrechterhält;
das UE so konfiguriert ist, dass es mindestens einen erforderlichen Dienst aus der Vielzahl von Diensten anfordert;
die SDM über die CDL allen lokal basierten Server-Einheiten (430) bereitgestellt wird, wobei die Abonnentendatenverwaltung, SDM, die Kundendaten für jedes UE bereitstellt, das sich in der Reichweite der lokal basierten Server-Einheit (430) befindet, und wobei die Kundendaten mindestens eines aus Anrufstatusdaten, Sitzungsdaten und Abonnementdaten umfassen.

2. Kommunikationsnetzwerk nach Anspruch 1, wobei die lokal basierte Server-Einheit (430) so konfiguriert ist, dass sie die Kundendaten kontinuierlich kopiert und in der lokal basierten Server-Einheit (430) speichert, die sich innerhalb der Reichweite des UE befindet, und die Kundendaten aufbewahrt, bis das UE den von ihm angeforderten Dienst beendet, solange sich das UE innerhalb der Reichweite der lokal basierten Server-Einheit (430) befindet und eine laufende Sitzung durch ein das Netzwerk durchsuchendes UE geöffnet ist.

3. Verfahren zur Kommunikation in einem Kommunikationsnetzwerk, wobei das Kommunikationsnetzwerk umfasst: eine zentralisierte Netzwerk-Gateway-Einheit, die eine horizontale Schicht mit einer gemeinsamen Datenschicht, CDL, aufweist, wobei die CDL so konfiguriert ist, dass sie eine Abonnentendatenverwaltung, SDM, speichert, eine oder mehrere lokal basierte Server-Einheiten mit vertikal virtualisierten Diensten, wobei die lokal basierten Server-Einheiten Edge-Computing-Instanzen sind, wobei die zentralisierte Netzwerk-Gateway-Einheit über eine gemeinsame Dienstschicht (Common Service Layer, CSL), mit der einen oder den mehreren lokal basierten Server-Einheiten über einen Zugangspunkt oder ein Gateway oder ein Funkzugangsnetz (Radio Access Network, RAN) verbunden ist, sowie eine zentralisierte Datenbank mit einer oder mehreren Front-End-, FE-, Instanzen, wobei die zentralisierte Datenbank mit der zentralisierten Netzwerk-Gateway-Einheit und mit der einen oder den mehreren lokal basierten Server-Einheiten über den Zugangspunkt/Gateway redundant verbunden ist oder über das RAN verbunden ist, wobei das Verfahren die folgenden Schritte umfasst::
Bereitstellen einer Vielzahl von Diensten für das UE durch das Kommunikationsnetzwerk über die eine oder die mehreren lokal basierten Server-Einheiten;
Speichern von Kundendaten des UE in der zentralisierten Datenbank;
Übertragen einer Kopie dieser Daten an mindestens eine der lokal basierten Server-Einheiten, die sich innerhalb der Reichweite des UE befindet;
Speichern mindestens eines der Vielzahl von Diensten bei mindestens einer lokal basierten Server-Einheit und Aufrechterhalten einer Kopie der Kundendaten in einer zustandsabhängigen Weise für eine Zeitspanne eines Anrufs oder einer Browsing-Sitzung für den Kunden;
Anfordern mindestens eines erforderlichen Dienstes aus der Vielzahl von Diensten durch das UE;
wobei eine Abonnentendatenverwaltung, SDM, über die gemeinsame Datenschicht allen lokal basierten Server-Einheiten bereitgestellt wird,
wobei das Verfahren ferner umfasst:
Bereitstellen der Kundendaten für jedes UE, das sich in der Reichweite der lokal basierten Server-Einheit befindet, durch die Abonnentendatenverwaltung, SDM, wobei die Kundendaten mindestens eines aus Anrufstatusdaten, Sitzungsdaten und Abonnementdaten umfassen.

4. Kommunikationsnetzwerk nach Anspruch 3, wobei das Verfahren ferner umfasst:
kontinuierliches Kopieren und Speichern der Kundendaten bei der lokal basierten Server-Einheit, die sich innerhalb der Reichweite des UE befindet; und
Aufbewahren der Kundendaten bei der lokal basierten Server-Einheit, die sich innerhalb der Reichweite des UE befindet, bis das UE den von ihm angeforderten Dienst beendet, solange sich das UE innerhalb der Reichweite der lokal basierten Server-Einheit befindet und eine laufende Sitzung durch ein das Netzwerk durchsuchendes UE geöffnet ist.

5. Computerprogramm mit einem Prozessor, der dazu konfiguriert ist, das Verfahren nach einem der Ansprüche 3 oder 4 durchzuführen.

## Revendications

1. Réseau de communication comprenant :
une entité de passerelle de réseau centralisée (200) présentant une couche horizontale avec une CDL [common data layer - couche de données commune], dans lequel la CDL est configurée pour stocker une SDM [subscriber data management - gestion de données d'abonné] ;
une ou plusieurs entités de serveur à base locale (430) présentant des services virtualisés verticalement, dans lequel les entités de serveur à base locale sont des instances en edge computing,
dans lequel l'entité de passerelle de réseau centralisée (200) est reliée par l'intermédiaire d'une CSL [Common Service Layer - couche de service commune] à les une ou plusieurs entités de serveur à base locale (430) par l'intermédiaire d'un point d'accès (420) ou d'une passerelle (420) ou d'un RAN [Radio Access Network - réseau d'accès radio] ;
au moins un UE [user equipment - équipement utilisateur] ; et
une base de données centralisée (410) présentant une ou plusieurs instances FE [front end - front-end] (411), la base de données centralisée (410) étant reliée à l'entité de passerelle de réseau centralisée (200) et aux une ou plusieurs entités de serveur à base locale (430) par l'intermédiaire : du point/de la passerelle d'accès (420) de manière redondante :
ou le RAN (420),
dans lequel :
le réseau de communication est configuré pour fournir une pluralité de services à l'UE par l'intermédiaire des une ou plusieurs entités de serveur à base locale (430) ;
la base de données centralisée est configurée :
- pour stocker des données de client de l'UE, et
- pour transférer une copie des données de client de l'UE à au moins une des entités de serveur à base locale qui se situe dans la plage de l'UE ;
l'au moins une des entités de serveur à base locale est configurée pour stocker au moins un de la pluralité de services et conserver une copie des données du client dans un état dynamique pendant un intervalle de temps d'un appel ou d'une session de navigation pour le client ;
l'UE est configuré pour demander au moins un service requis parmi la pluralité de services ;
la SDM est fournie par l'intermédiaire de la CDL à toutes les entités de serveur à base locale (430), dans lequel la SDM fournit les données de client pour chaque UE qui se situe dans la plage de l'entité de serveur à base locale (430) et dans lequel les données de client comprennent au moins une des données d'état d'appel, des données de session et des données d'abonnement.

2. Réseau de communication selon la revendication 1, dans lequel l'entité de serveur à base locale (430) est configurée pour copier et stocker en continu les données de client sur l'entité de serveur à base locale (430) qui se situe dans la plage de l'UE et pour conserver les données de client jusqu'à ce que l'UE finisse le service qu'il avait demandé tant que l'UE se situe dans la plage de l'entité de serveur à base locale (430), et une session d'exécution est ouverte par l'UE naviguant dans le réseau.

3. Procédé de communication dans un réseau de communication, dans lequel le réseau de communication comprend : une entité de passerelle de réseau centralisée présentant une couche horizontale avec une CDL, dans lequel la CDL est configurée pour stocker une SDM, une ou plusieurs entités de serveur à base locale présentant des services virtualisés verticalement, dans lequel les entités de serveur à base locale sont des instances en edge-computing, dans lequel l'entité de passerelle de réseau centralisée est reliée par l'intermédiaire d'une CSL aux une ou plusieurs entités de serveur à base locale par l'intermédiaire d'un point d'accès ou d'une passerelle ou d'un RAN, et une base de données centralisées présentant une ou plusieurs instances en FE, la base de données centralisée étant reliée à l'entité de passerelle de réseau centralisée et aux une ou plusieurs entités de serveur à base locale par l'intermédiaire : du point/de la passerelle d'accès de manière redondante ou du RAN,
le procédé comprenant les étapes de :
fourniture, par le réseau de communication, d'une pluralité de services à l'UE par l'intermédiaire des une ou plusieurs entités de serveur à base locale ;
stockage, sur la base de données centralisées, de données de client de l'UE ;
de transfert d'une copie de ces données à au moins une des entités de serveur à base locale qui se situe dans la plage de l'UE ;
de stockage, sur au moins une entité de serveur à base locale, d'au moins un de la pluralité de services et de conservation d'une copie des données du client dans un état dynamique pendant un intervalle de temps d'un appel ou d'une session de navigation pour le client ;
de demande, par l'UE, d'au moins un service requis parmi la pluralité de services,
dans lequel une SDM est fournie par l'intermédiaire de la couche de données commune à toutes les entités de serveur à base locale, le procédé comprenant en outre : la fourniture, par la SDM, des données du client pour chaque UE qui se situe dans la plage de l'entité de serveur à base locale et dans lequel les données de client comprennent au moins une des données d'état d'appel, des données de session et des données d'abonnement.

4. Réseau de communication selon la revendication 3, le procédé comprenant en outre :
la copie et le stockage en continu, sur l'entité de serveur à base locale qui se situe dans la plage de l'UE, des données de client ; et
le maintien, sur l'entité de serveur à base locale qui se situe dans la plage de l'UE, des données de client jusqu'à ce que l'UE finisse le service qu'il avait demandé tant que l'UE se situe dans la plage de l'entité de serveur à base locale, et une session d'exécution est ouverte par l'UE naviguant dans le réseau.

5. Programme informatique présentant un processeur configuré pour réaliser le procédé selon l'une quelconque des revendications 3 ou 4.
